Europäisches Patentamt

(19) European Patent Office    (11) Publication number: **0 122 030**
Office européen des brevets    **B1**

(12)    **EUROPEAN PATENT SPECIFICATION**

(45) Date of publication of patent specification: **26.08.87**    (51) Int. Cl.⁴: **G 11 B 5/64,** G 11 B 5/84, H 01 F 41/20

(21) Application number: **84301530.6**

(22) Date of filing: **08.03.84**

(54) **A magnetic recording member and a manufacturing method for such a member.**

(30) Priority: **08.03.83 JP 36652/83**
**08.03.83 JP 36653/83**
**26.04.83 JP 72075/83**
**18.05.83 JP 85786/83**
**21.05.83 JP 88389/83**

(43) Date of publication of application:
**17.10.84 Bulletin 84/42**

(45) Publication of the grant of the patent:
**26.08.87 Bulletin 87/35**

(84) Designated Contracting States:
**CH DE FR GB IT LI NL**

(56) References cited:
**EP-A-0 023 328**
**EP-A-0 054 269**
**DE-A-3 021 155**
**DE-A-3 226 639**
**FR-A-2 376 485**
**US-A-4 239 835**

(73) Proprietor: **NIHON SHINKU GIJUTSU**
**KABUSHIKI KAISHA also trading as ULVAC**
**CORPORATION**
**2500, Hagizono**
**Chigasaki-shi Kanagawa-ken (JP)**

(72) Inventor: **Nakamura, Kyuzo**
**672-20, Yachimata Ho Yachimata-machi**
**Inba-gun Chiba-ken (JP)**
Inventor: **Ota, Yoshifumi**
**129, Yachimata Ni Yachimata-machi**
**Inba-gun Chiba-ken (JP)**
Inventor: **Yamada, Taiki c/o Umenosato-ryo**
**NIHON SHINKU GIJUTSU K.K. 617-2, Aza**
**Umenosato**
**Asahi Yachimata-machi Inba-gun Chiba-ken (JP)**

(74) Representative: **Billington, Lawrence Emlyn**
**et al**
**HASELTINE LAKE & CO. Hazlitt House**
**28 Southampton Buildings Chancery Lane**
**London WC2A 1AT (GB)**

Courier Press, Leamington Spa, England.

## Description

This invention relates to a magnetic recording member and a manufacturing method for such a member.

A recent development known to the applicants is that of a new magnetic recording system capable of high density recording, involving a perpendicular magnetic recording system and a magneto-optical recording system. A magnetic film proposed for such recording systems is a so-called perpendicular-incident deposition magnetic film, which has a magnetic anisotropy in the direction perpendicular to the plane of the film and meets the required conditions of "$Ku_\perp \geq 2\pi Ms^2$, $Hc_\perp > Hc_{||}$ and $Br_\perp > Br_{||}$.

As hitherto known, Co having an hcp structure has a large magnetic crystalline anisotropy in the c axial direction and for obtaining a perpendicular-incident deposition magnetic film by making use of this magnetic anisotropy, it is necessary to meet such requirements that (1) the direction of the c axis thereof is substantially perpendicular to the plane of the film, and that (2) the magnetic crystalline anisotropy Ku is larger than the diamagnetic field $2\pi Ms^2$ generated in the perpendicular direction to the plane of the film. However, the Co film has a large value of saturation magnetization Ms, and therefore does not meet the foregoing requirement (2), so that a perpendicular-incident deposition magnetic film cannot be made of Co.

There has been also proposed, as a perpendicular-incident deposition magnetic film, a Co—Cr system thin film, and this film has been made by an evaporation process. However, the evaporation process is defective in that the vapor pressures of Co and Cr are substantially different from each other, and consequently it becomes difficult to keep a uniform Cr—Co composition ratio for a long period of time during manufacture of the magnetic film. A uniform magnetic film having a perpendicular magnetic property can be obtained only when evaporation deposition thereof on a substrate is carried out under the condition that the substrate is heated to 200—300°C. In other words, the perpendicular-incident deposition magnetic film cannot be obtained unless the substrate is heated, and curling of a tape-shaped substrate and warping of a substrate of the floppy disk type are caused by such heat. For preventing this, a heat resisting substrate has to be used, resulting in increased production costs.

EP—A—0 054 269 discloses the production of a magnetic recording member comprising a perpendicular Co—Cr magnetic film of the above type.

US—A—4 239 835 discloses a magnetic recording member formed by vacuum deposition of a ferromagnetic metal or alloy thereof onto a substrate in the presence of oxygen gas. The deposition is carried out in such a way that the columnar crystal structure of the ferromagnetic metal or alloy film is inclined at an angle of less than 60° relative to the normal to the substrate. However, there is no suggestion that the film has perpendicular magnetic anisotropy nor does this document contain any teachings as to the relative proportions of the components of the film.

EP—A—0 23 328 discloses the production of a magnetic recording member by forming a film containing Ni, Co and oxygen on a substrate by vacuum deposition. The angle of vapour incidence is from 40 to 80°. Thus the resultant film is not a perpendicular magnetic film.

According to a first aspect of the invention there is provided a magnetic recording member comprising a substrate carrying, either directly on its surface or on an intermediate layer of soft magnetic material coated on its surface, a perpendicular magnetic film characterised in that said magnetic film is formed from a composition represented by $(Fe_xCo_yNi_z)_{1-m}O_m$, where $0 \leq x \leq 0.05$, $0 \leq z \leq 0.40$, $x+y+z=1$, and $0.15 \leq m \leq 0.50$ and has a columnar structure of the hcp type in which the c axis is oriented in the direction perpendicular to the plane of the film, whereby the film has magnetic anisotropy in a direction perpendicular to the plane of the film satisfying the conditions of $Ku_\perp \geq 2\pi Ms^2$, $Hc_\perp > Hc_{||}$ and $Br_\perp > Br_{||}$.

According to another aspect of the present invention there is provided a magnetic recording member comprising a substrate carrying, either directly on its surface or on an intermediate layer of soft magnetic material coated on its surface, a perpendicular magnetic film characterised in that said magnetic film is formed from a composition represented by $(Fe_xCo_yNi_z)_{1-m}O_m$, where $0.40 \leq x \leq 1.0$, $0 \leq z \leq 0.25$, $x+y+z=1$, and $0.25 \leq m \leq 0.50$ and has a structure of the bcc type in which the (100) direction of the structure is oriented in the direction perpendicular to the plane of the film, whereby the film has magnetic anisotropy in a direction perpendicular to the plane of the film satisfying the conditions of $Ku_\perp \geq 2\pi Ms^2$, $Hc_\perp > Hc_{||}$ and $Br_\perp > Br_{||}$.

According to a third aspect of the present invention there is provided a method of manufacturing a magnetic recording member by introducing a magnetic metal into a vacuum treatment chamber, vaporizing the magnetic metal, and depositing the vapors on a substrate at a substantially perpendicular angle of incidence thereto so that there is formed on the substrate a perpendicular magnetic film characterised in that oxygen gas is introduced into the chamber so as to oxidise part of the magnetic metal and the method is carried out so that the magnetic film is formed from a composition having the formula $(Fe_xCo_yNi_z)_{1-m}O_m$, where $0 \leq x \leq 0.05$, $0 \leq z \leq 0.40$, $x+y+z=1$, and $0.15 \leq m \leq 0.50$ and has a columnar structure of the hcp type in which the c axis is oriented in the direction perpendicular to the plane of the film, whereby the film has magnetic anisotropy in a direction perpendicular to the plane of the film satisfying the conditions of $Ku_\perp \geq 2\pi Ms^2$, $Hc_\perp > Hc_{||}$ and $Br_\perp > Br_{||}$.

According to a fourth aspect of the present invention there is provided a method of manufacturing a magnetic recording member by introducing a magnetic metal into a vacuum treatment chamber, vaporizing the magnetic metal, and depositing the vapors on a substrate at a substantially perpendicular angle of incidence thereto so that there is formed on the substrate a perpendicular magnetic film characterised in that oxygen gas is introduced into the chamber so as to oxidise part of the magnetic metal and the method is carried out so that the magnetic film is formed from a composition having the formula $(Fe_xCo_yNi_z)_{1-m}O_m$, where $0.40 \leq x \leq 1.0$, $0 \leq z \leq 0.25$, $x+y+z=1$, and $0.25 \leq m \leq 0.50$ and has a structure of the bcc type in which the (100) direction of the structure is oriented in the direction perpendicular to the plane of the film, whereby the film has magnetic anisotropy in a direction perpendicular to the plane of the film satisfying the conditions of $Ku_\perp \geq 2\pi Ms^2$, $Hc_\perp > Hc_{\parallel}$ and $Br_\perp > Br_{\parallel}$.

According to a fifth aspect of the present invention part of the vapors are ionised while the aforesaid methods are carried out and, in a development of this fifth aspect, the ionised vapours are accelerated in speed by an electromagnetic field of d.c. or a.c. power.

According to a sixth aspect of the invention there is provided a manufacturing method characterised in that a target comprising a magnetic metal Me provided in a vacuum treatment chamber is sputtered under the condition that $O_2$ gas is introduced into the chamber and sputtered fine particles of the magnetic metal are deposited on a surface of a substrate at substantially perpendicular incidence thereon while part of the atoms of the sputtered fine particles is oxidized, so that there is formed on the surface of the substrate a substantially perpendicular magnetic film having a predetermined composition of magnetic metal Me and O atoms.

In a development of the sixth aspect there are provided in the vacuum treatment chamber the target of the magnetic metal Me and an electrode comprising the substrate itself, or an electrode provided near the substrate, and the electrode is supplied with an electric voltage of d.c. or a.c. power, and the target is sputtered while $O_2$ gas is introduced into the chamber so that innumerable sputtered magnetic metal particles are deposited on the substrate at substantially perpendicular incidence thereon, while some atoms thereof are oxidized and thus there is formed on the substrate a substantially perpendicular magnetic film comprising a predetermined composition of magnetic metal and O atoms.

In any of the above methods, the substrate may be provided with a soft magnetic material coating layer on which is formed the substantially perpendicular magnetic film.

Preferred examples of the invention provide a perpendicular-type recording member free from the foregoing inconveniences and which may be characterised in that there is formed either directly on the surface of a substrate, or on an intermediate soft magnetic material coating layer on the surface of the substrate, a substantially perpendicular-incident deposition magnetic film. The film comprises a specified composition of magnetic metal Me and oxygen. The soft magnetic material coating layer may be made of permalloy or an amorphous film made of Fe, Co, Co—Zr or the like.

Preferred examples of the invention provide a method of manufacturing the above perpendicular-type magnetic recording member and this may be characterized in that while oxygen gas is introduced into a vacuum treatment chamber, a magnetic metal Me is vaporized and atomic vapors thereof are deposited on a surface of a substrate at a substantially perpendicular incident angle to the surface of the substrate. Part of the metal vapors is oxidized, so that there is formed on the surface of the substrate a substantially perpendicular magnetic film provided by either a composition of $(Fe_xCo_yNi_z)_{1-m}O_m$ where, substantially, $0 \leq x \leq 0.05$, $0 \leq z \leq 0.40$, $x+y+z=1$ and $0.15 \leq m \leq 0.50$, or a composition of $(Fe_xCo_yNi_z)_{1-m}O_m$ where, substantially $0.40 \leq x \leq 1.0$, $0 \leq z \leq 0.25$, $x+y+z=1$ and $0.25 \leq m \leq 0.50$.

For a better understanding of the invention and to show how it may be put into effect, reference will now be made by way of example to the accompanying drawings in which:

Fig. 1 is a side view of an apparatus for manufacturing a perpendicular-type magnetic recording member according to the invention;

Figs. 2A, 2B and 2C are diagrams showing the relationships between various Co—O compositions and the magnetic properties thereof;

Fig. 3 is a diagram showing characteristic curves of an hysteresis loop of one example of perpendicular magnetic films of the invention;

Figs. 4 to 6 are diagrams showing the relationships between various Co—Ni—O compositions and magnetic properties thereof;

Fig. 7 is a diagram showing characteristic curves of an hysteresis loop of another example of an inventive magnetic film;

Fig. 8 is a diagram showing the composition ratios of three metallic components applicable to perpendicular magnetic films of the invention;

- Figs. 9 to 14 are diagrams showing the relationships between various composition ratios of three metallic components containing various contents of O atoms;

Fig. 15 is a side view of another apparatus for manufacturing magnetic recording members according to additional manufacturing methods of the invention;

Figs. 16 to 19 are diagrams showing the relationships between manufacturing methods of the invention and magnetic properties of magnetic films manufactured thereby;

Fig. 20 is a side view of another apparatus for manufacturing magnetic recording members by additional manufacturing methods of the invention; and

Figs. 21 to 25 are diagrams showing the relationships between manufacturing methods of the invention and magnetic properties of magnetic films manufacturing thereby.

In the first place, there are explained hereafter a perpendicular-type magnetic recording member having a perpendicular-incident deposition magnetic film comprising a composition of Co and 15—50 at% O, and a manufacturing method thereof.

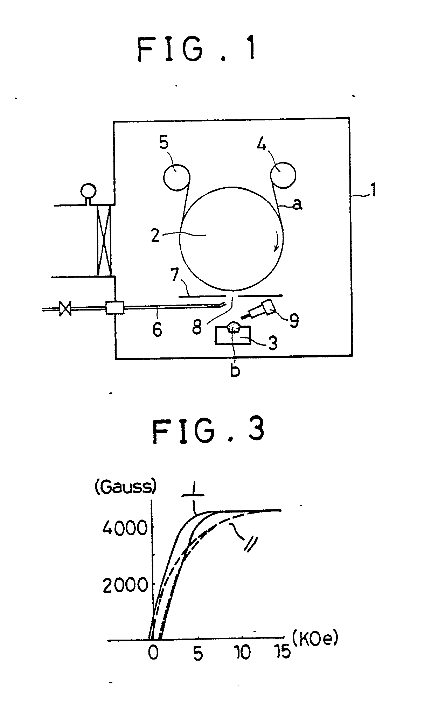

Figure 1 shows a vacuum evaporation treatment apparatus for manufacturing the foregoing magnetic recording member according to the present invention. Numeral 1 denotes a vacuum treatment chamber, and there are provided in the chamber 1 a rotary cooling can 2 of cylindrical drum type and an electron beam evaporation source 3 comprising a crucible positioned just under the can 2. The chamber 1 is connected through a control valve to a vacuum pump which is not shown. On opposite sides of an upper region above the rotary can 2 an unwinding roller 4 and a winding roller 5 are disposed and are arranged to be rotated by a motor (not shown). A tape-shaped substrate a made of such non-magnetic material as a PET material is mounted on the unwinding roller 4 and is arranged to be unrolled and run at a constant speed around a circumferential surface of the water-cooled can 2, and finally to be taken-up by the winding roller 5. There is provided a supply pipe 6 for introducing oxygen into the chamber 1. A control valve may be interposed in the pipe 6 in the illustrated example, and the supply pipe 6 is made so long that its open end is located near a surface of the running tape substrate a. Numeral 7 denotes right and left vapor-adhesion shield plates which are so disposed as to leave a space interval 8 therebetween at a region through which the lowermost surface of the can 2 faces the evaporation source 3, so that Co atoms evaporated from the evaporation source 3 may pass through the space interval 8 and be deposited on the surface of the tape substrate a substantially perpendicular to the surface of the substrate a. The plate 7 may be arranged to be movable to the right or left if desired. Numeral 9 denotes an electron beam heating means.

A magnetic recording member according to this invention is manufactured by using the above apparatus as follows:

In the first place, after the interior of the chamber 1 is evacuated to below $1 \times 10^{-5}$ Torr $(1.33 \times 10^{-3}$ Pa), a raw ferro-magnetic metal material b to be evaporated, Co metal for instance, is evaporated at a constant rate from the evaporation source 3 by electron beam heating. In the meantime, $O_2$ gas is introduced into the chamber 1 through the supply pipe 6 for oxidizing part of the Co vapors, and the partially oxidized Co vapors pass through the space 8 and are deposited on the substrate a running on the lower surface of the cooled can 2. The vapors are deposited substantially perpendicularly on the substrate a, so that there is formed on the surface of the tape substrate a a perpendicular-incident deposition magnetic film comprising a composition of Co—O.

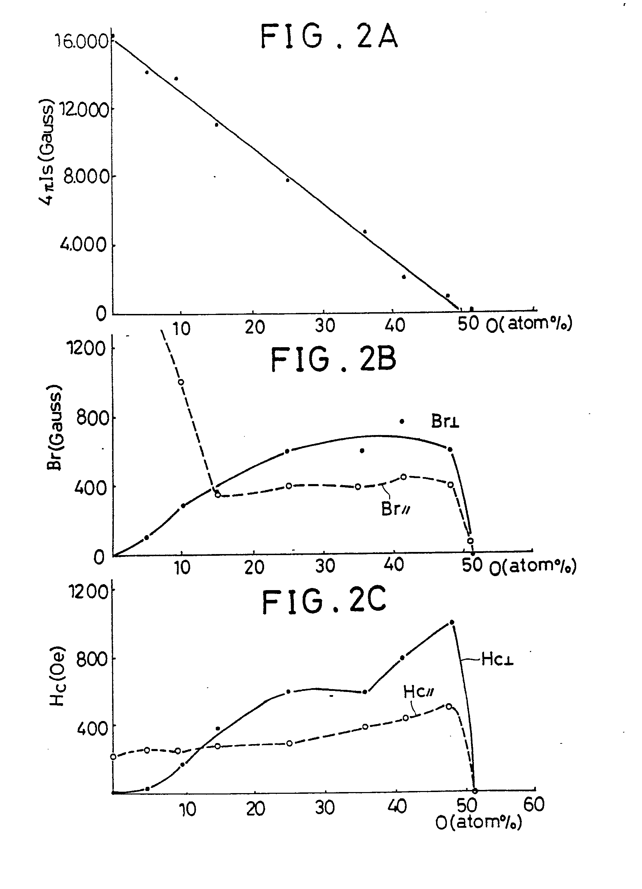

In this way by varying the introduced amount of $O_2$ gas or providing various partial pressures thereof in the chamber, a large number of perpendicular-type magnetic recording members having respective Co—O perpendicular magnetic films comprising various composition ratios of Co—O have been manufactured. These members also had magnetic films which vary in thickness in the range of 1000 Å—10000 Å (100—1000 nm), caused by varying the running speed of the tape substrate a. On these films of various Co—O composition ratios, magnetic properties were measured to obtain the relationships between the Co—O composition ratios and the magnetic properties, as shown in Figures 2A, 2B, 2C. As will be understood therefrom, as the O content is increased, both the coercive force $Hc_\perp$ in the direction perpendicular to the film surface, and the residual magnetic flux density $Br_\perp$ thereof, are increased, and if the O content becomes above 15 atom.%, both $Hc_\perp$ and $Br_\perp$ become higher than the coercive force $Hc_\parallel$ in the plane of the film and the residual magnetic flux density $Br_\parallel$ in the plane of the film respectively, so that perpendicular deposition magnetic films can be obtained. However, if the O content is beyond 50 at%, the saturation magnetization value becomes zero, resulting in loss of the magnetic properties of the film.

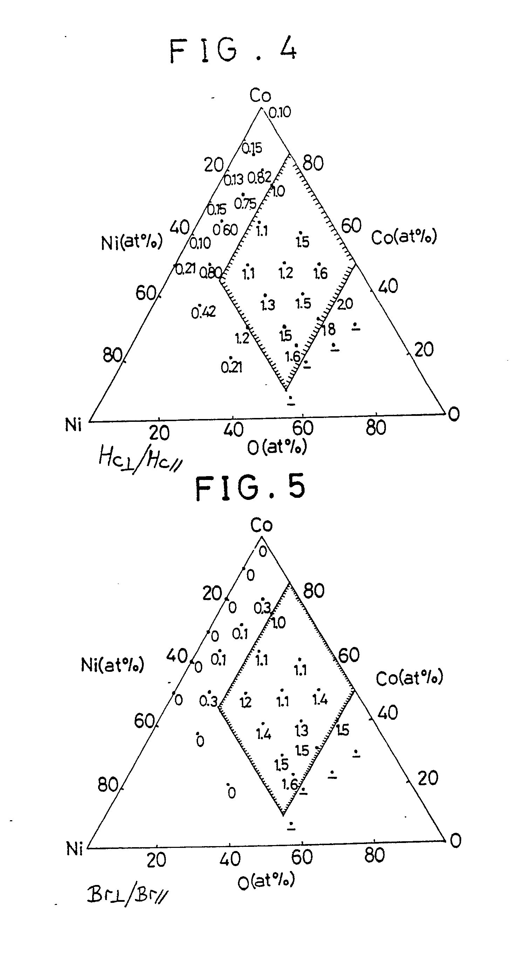

Fig. 3 shows characteristic curves of an hysteresis loop resulting from a perpendicular magnetic film comprising a typical composition of Co-36 at.% O, and from this Figure it will be understood that this is a substantially perpendicular magnetic film. In the above manufacturing operation, films having any predetermined compositions in the range of Co—15 to 50 at% O, can be also manufactured by varying the evaporation rate of Co while the introduction rate of $O_2$ gas is varied. The relationships between the two are generally proportional to the incident deposition frequencies of both the atoms upon the substrate, and therefore if the Co evaporation rate is increased, it is necessary to increase the partial pressure of $O_2$. As is clear from Figure 2C, the perpendicular magnetic films comprising the Co—15 to 50 at% O compositions have excellent coercive force $Hc_\perp$ in the range of about 400—1000 $\theta_e$ (32—80 kAm$^{-1}$), which are the best values for a perpendicular magnetic film.

When a previously proposed magnetic recording member having a perpendicular-incident deposition magnetic film comprising a Co—Cr composition is manufactured by the evaporation process, it is essential to deposit the Co and Cr atoms on a substrate which has been heated to 200—300°C. According to the present methods, heating of the substrate is not required at all.

A good perpendicular-type magnetic film can be obtained even in the case where the substrate is cooled, or unheated and thus remains at normal temperature. The present methods are not therefore limited to substrates which are made of an expensive heat-resisting plastics film such as polyimide or the like. In other words, the material of the substrate to be used is not limited, so that an inexpensive material having no heat-resistance such as a PET film or the like can be used, and a good perpendicular-type magnetic film can be obtained without heating the substrate. However, it is of course possible for the substrate to be heated if so desired.

Also, when an already-proposed Co—Cr perpendicular type recording member is manufactured by the evaporation process, control of the Cr composition ratio is difficult, so that it is difficult or impossible to provide a uniform perpendicular magnetic film for a long time in a continuous manufacturing operation. Also violent curling or warping of the substrate is brought about by the heat. According to the methods of the present invention on the other hand, it is sufficient to keep constant the evaporation rate of the Co and the introduction rate of the $O_2$ gas. It is thereby easy to form on the substrate a uniform perpendicular magnetic film in a continuous manufacturing operation, and curling and warping of the substrate hardly occurs when the substrate is not heated. This is very useful when manufacturing a floppy disk or magnetic tape or the like.

The reason why the inventive Co—O magnetic film has the foregoing good magnetic properties is not wholly clear, but can be demonstrated as follows:

When the Co atoms are deposited on the substrate at a substantially perpendicular-incident angle thereto, there is formed a coating film having a columnar structure in which the c axis of the hcp structure is oriented in the direction perpendicular to the plane of the film. During this evaporation, part of the evaporated Co atoms is oxidized by the introduced $O_2$, and the resultant CoO oxide or similar oxide is deposited on the substrate, so that there is formed a film structure where the fine particles of Co are coated with these non-magnetic oxides. Thus, the Co columnar particle has not only crystalline anisotropy but also a shape anisotropy, and thereby the perpendicular magnetic anisotropy of the film is improved. With such a film structure which is partially oxidized as above, the average saturation magnetization value is lowered and meets the requirements of $Ku_\perp \geqq 2\pi Ms^2$ whereby the required perpendicular magnetic film is obtained. The diameter of the columnar Co particle is considered to be about from several tens nanometers to several hundreds nanometers, and is a fine metal particle. Accordingly it has a high magnetic holding or coercive force.

A minor amount of one or more other elements may be mixed in the foregoing Co—O perpendicular magnetic film. Also, any element which makes a solid solution with Co and does not cause harm to the hcp structure, for instance, Cr, V, Mo, W, Rh, Ti, Re etc. may be mixed therein in a minor amount.

In addition, it has been found that one can use in the perpendicular magnetic recording system a magnetic recording member having, between the perpendicular magnetic film and the non-magnetic substrate, an intermediate magnetic film formed of permalloy or an amorphous film of Fe, Co, Co—Zr that has a comparatively soft magnetic property and large saturation magnetization. If such an intermediate film is used, the electric current required for recording can be decreased, and also the reproduction output can be increased. Such a perpendicular magnetic recording member may be manufactured in such a manner that initially the intermediate magnetic film is formed on a surface of the non-magnetic substrate, and then a perpendicular-incident deposition magnetic film comprising a predetermined Co—O composition is formed on a surface of the intermediate magnetic film according to the present manufacturing methods according to the present invention.

Furthermore, when the present invention is applied to the manufacture of a floppy disc, the intermediate magnetic film as above may be formed on one or both surfaces of the substrate and then the perpendicular magnetic film comprising a predetermined Co—O composition can be formed on one or both surfaces of the intermediate magnetic film.

Next, another example of the invention will be explained with reference to Figures 4 to 7, which concern a perpendicular-type magnetic recording member having a perpendicular-incident deposition magnetic film comprising a predetermined Co—Ni—O composition, and a manufacturing method thereof. Namely, the Co—Ni—O composition is $(Co_{1-z}Ni_z)_{1-m}O_m$ wherein $O<z<0.40$ and $0.15<m<0.50$.

A perpendicular-type magnetic recording member having a perpendicular magnetic film comprising the foregoing Co—ni—O composition may be manufactured using the apparatus shown in Fig. 1, and almost in the same manner as the first embodiment of this invention. Namely, initially, after the interior of the chamber 1 is evacuated to below $1\times10^{-5}$ Torr ($1.33\times10^{-3}$ Pa), a Co—Ni alloy or a mixture of Co and Ni metals mixed in a predetermined ratio is evaporated at a constant rate by an electric beam heating means while $O_2$ gas is introduced into the chamber 1 through the pipe 6. Partially oxidized vapors of Co and Ni are deposited on a surface of the substrate a running at a constant speed, substantially perpendicularly or normally thereto so that there is formed thereon a perpendicular-incident deposition magnetic film comprising a predetermined Co—Ni—O composition.

In this manufacturing method, perpendicular-type magnetic recording members having evaporation deposition magnetic films comprising various Co—Ni—O compositions were prepared by varying the $O_2$ gas introduction rate for obtaining various $O_2$ partial pressures in the chamber 1, or by varying the mixing ratio of Co to Ni to be evaporated.

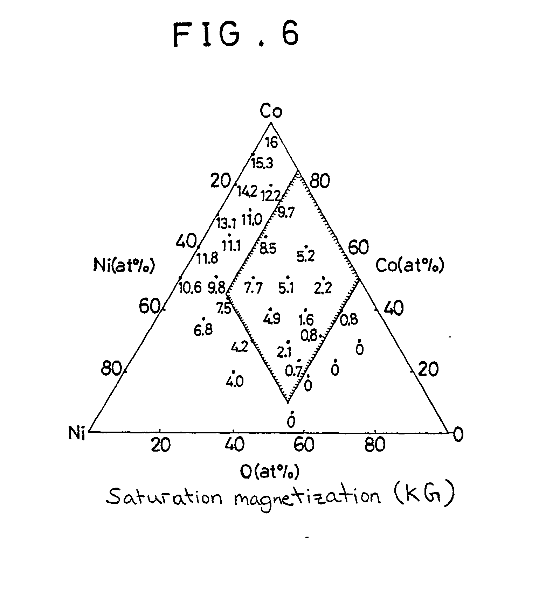

Also, by varying the running speed of the tape substrate a and/or varying the evaporation rate of Ni—Co magnetic recording members having magnetic films which varied in thickness within the range 1000 Å—10000 Å (100—1000 nm) were made. Thus the relationships between the various magnetic films which differ in their composition ratio of Co—Ni—O, and their magnetic properties, were examined. The results obtained are shown respectively in Figure 4, Figure 5 and Figure 6. As is clear from Fig. 4, as the O component is increased, $Hc_\perp/Hc_\parallel$ (representing the ratio of $Hc_\perp$ to $Hc_\parallel$) is increased, and more than 15 atom % of O component makes the $Hc_\perp/Hc_\parallel$ ratio more than 1. As regards the residual magnetic flux density $Br_\perp/Br_\parallel$, as shown in Fig. 5, as the O component is increased the residual magnetic flux density is increased also, and more than 15 atom % of the O component makes the residual magnetic flux density more than 1. However, as shown in Fig. 6, the saturation magnetization becomes zero when the O component is above 50 atom %. From the above results within the area surrounded by the oblique lines in those Figures, that is, in the composition range of $(Co_{1-z}Ni_z)_{1-m}O_m$ where $0<z<0.40$, $0.15<m<0.50$, there can be obtained excellent perpendicular magnetic films according to the present invention.

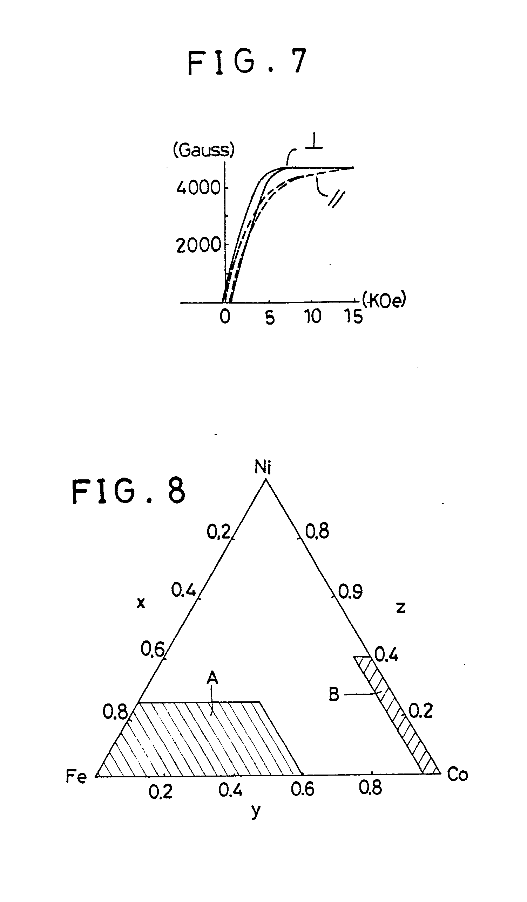

Figure 7 shows characteristic curves of the hysteresis loop of a typical perpendicular magnetic film comprising $(Co_{0.9}Ni_{0.1})_{0.7}O_{0.3}$ according to the present invention, and it is clear therefrom that the film is a substantially perpendicular magnetic film. Thus, when the O component is in the range of 15—50 at%, and the ratio of Co to Ni is 60<Co<100 to 0<Ni<40 at% perpendicular magnetic films can be obtained. Beyond 40 at% of Ni content, the crystalline structure of the deposited metal grains becomes a fcc structure resulting in much decreased magnetic crystalline anisotropy and producing no perpendicular magnetic film.

In addition, this inventive perpendicular magnetic film including the Ni material is improved in corrosion resistance. The perpendicular magnetic holding or coercive force of this inventive magnetic film is about 400—1000 θe (32—80 KAm⁻¹), which are the best values for a perpendicular-type magnetic recording member.

In manufacturing the above magnetic film within the above Co—Ni—O composition range, it is general that if the Co—Ni evaporation rate is changed, the $O_2$ gas introduction rate is also changed.

Since the perpendicular incident deposition frequencies of the Co atoms and the Ni atoms and those of the O atoms on the substrate are almost proportional one to another, if the Co—Ni evaporation rate is increased, it is necessary to increase the partial pressure of $O_2$ by increasing the introduction rate of the $O_2$ gas.

In this example of the inventive method, the substrate is cooled by the can 2, but it is not always necessary to cool the substrate. Good results also can be obtained when the substrate is not heated. When the substrate is not heated, no curling or warping thereof is brought about, resulting in a good product.

Thus, in this example also, inexpensive material can be used as the substrate.

Also according to this example of the invention, the vapor pressure of Co and of Ni are almost equal, and therefore if a Co—Ni alloy of any predetermined component ratio thereof is evaporated from a single common evaporation source 3, a desired predetermined composition of Co—Ni evaporation deposition can be obtained on the substrate. Consequently, in this case, if the $O_2$ introduction rate is kept constant, a predetermined uniform Co—Ni—O composition magnetic film can be produced over a long period of time in a continuous manufacturing operation.

In this example also, the aforementioned intermediate magnetic film, as mentioned in the first example, may be interposed between the substrate and the perpendicular magnetic film having the Co—Ni—O composition.

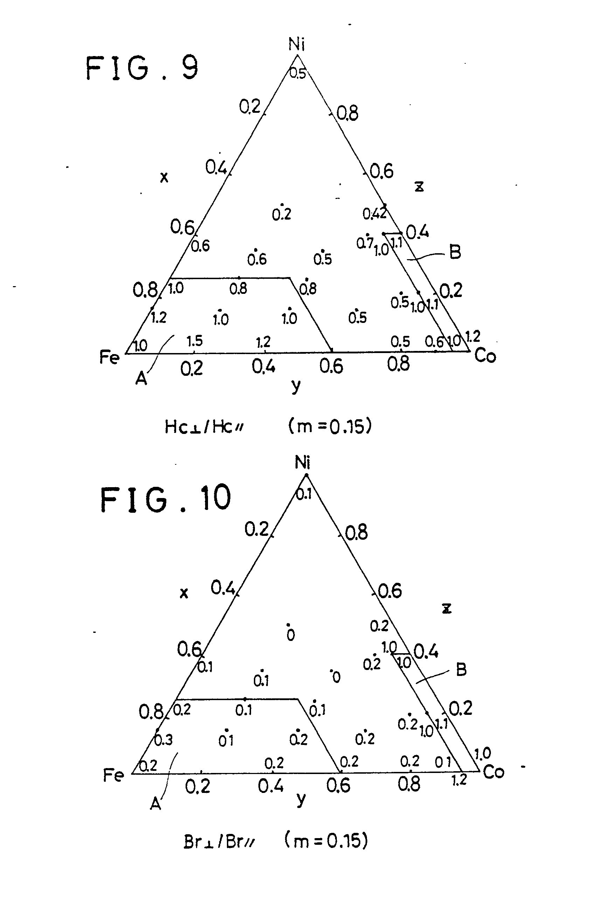

Next, a third example of this invention will be explained with reference to Figures 8 to 14 as follows:

Namely, the third example relates to a perpendicular-type magnetic recording member having a perpendicular magnetic film comprising an Fe—Co—Ni—O composition.

In more detail, the Fe—Co—Ni—O composition is $(Fe_xCo_yNi_z)_{1-m}O_m$ where $0 \leq x \leq 0.05$, $0 \leq z \leq 0.40$, $x+y+z=1$, and $0.15 \leq m \leq 0.50$ which is the region forming a hcp structure, or $(Fe_xCo_yNi_z)_{1-m}O_m$ where $0.40 \leq x \leq 1.0$, $0 \leq z \leq 0.25$, $x+y+z=1$, and $0.25 \leq m \leq 0.50$ which is the region forming a bcc structure.

A manufacturing method for the above magnetic recording member may be carried out using the aforementioned apparatus 1 in almost the same manner as in the previous two examples.

The perpendicular-incident deposition magnetic film thus obtained comprises a phase of perpendicularly grown columnar ferro-magnetic grains of Fe—Co—Ni and a phase of non-magnetic oxides thereof surrounding the columnar grains.

There have been manufactured many magnetic recording members having the Fe—Co—Ni—O composition system in which the composition ratios of the four elements were varied, and the magnetic properties of these members have been measured. As a result thereof it has been found that, as shown in Fig. 8, by partially oxidizing the composition ratios of Fe—Co—Ni falling in two regions A and B surrounded respectively by the oblique lines, there can be obtained excellent perpendicular magnetic films. The A region is one forming a bcc structure, and the B region is one forming a hcp structure. As mentioned above it is necessary for making a perpendicular-incidence magnetic film, that the perpendicular magnetic anisotropic energy $Ku_\perp$ is larger than the diamagnetic field energy $2\pi Ms^2$ in the direction perpendicular to the plane of the film. In this case, as the perpendicular magnetic anisotropy a magnetic crystalline anisotropy and magnetic shape anisotropy can be considered. It has been found that the perpendicular magnetic film of this example has such a structure that the ferromagnetic column grain phase of Fe—Co—Ni grown perpendicularly is surrounded by a non-magnetic phase of oxides of Fe—Co—Ni, and also the column grain is such a long one that the diameter of its short axis is about 200—1000 Å (20—100 nm) and that of its long axis is about 1000 Å (100 nm)—1μm, so that this example of magnetic film has also a large magnetic shape anisotropy. In addition, as a result of X-ray diffraction it has been found that in the B region the c axis of the hcp structure is oriented in the perpendicular direction and the axial direction is in the easy crystal magnetization direction, so that this embodiment of magnetic film has magnetic crystalline anisotropy.

Thus, the role of the oxygen introduction is to separate the perpendicular columnar grains from each other by the non-magnetic oxides and to decrease the saturation magnetization of the entire magnetic film for satisfying the condition of $Ku_\perp \geqq 2\pi Ms^2$.

As the oxygen gas introduction rate is increased while the evaporating rate of Fe, Co, Ni is kept constant, the concentration of oxygen in the film is increased and at the same time a decrease in size of the columnar grain and the separation thereof from the oxide occur, so that the saturation magnetization decreases and the anisotropic field in the perpendicular direction increases. As a result of many experiments, it has been found that the perpendicular magnetic film is obtained when the oxygen component is more than 25 at% in the A region and more than 15 at% in the B region, and effective perpendicular magnetic films can be obtained in the range of 15 to 50 at% in oxygen content in the A region and, above all, most effectively one in the range of 35—45 at% O. In the B region effective films can be obtained in the range of 15—50 at% in $O_2$ content and most effectively in the range of 25—45 at% O. Namely , if the O content is beyond 50 at%, it causes the saturation magnetization to become zero. This is considered to be due to the fact that the oxides are FeO, CoO, NiO or mixed crystallines thereof in the automatic ratio of 1:1.

The $Hc_\perp$ of the perpendicular magnetic film obtained in the foregoing two A, B regions with oxygen contents in the foregoing predetermined range, are about 400—1000 Өe (32—80 kA⁻¹), which are the best values for a perpendicular magnetic recording member. Those values were obtained using the foregoing apparatus as shown in Fig. 1 and in almost the same manner as in the foregoing examples even in the case where the substrate is not heated to a normal temperature, or in the case where it is cooled. The reason why good perpendicular magnetic properties can be obtained even under the conditions where the substrate is not heated is considered to be due to the fact that the O atoms easily diffuse or spread over the film surface.

The previously proposed Co—Cr system perpendicular magnetic film is obtained with such a structure that Cr atoms are segregated around the crystal boundaries of the Co columnar grains to form non-magnetic phases separating the columnar grains from each other. For forming this structure, it is necessary to diffuse Cr atoms over the film surface, and this is achieved by raising the temperature of the substrate. This effect cannot be achieved when the substrate is not heated or when the temperature of the heating is low. According to the present invention however, oxygen gas is arranged to be introduced and easily diffuses over the film surface. Even in the case where the substrate is not heated, a good perpendicular magnetic film can be obtained. the manufacturing method for the above products is almost the same as the previous two examples.

Further, advantages brought about by the manufacturing method are substantially the same as those in the two previous examples. Namely, there can be obtained a uniform magnetic film for a long period of time in a continuous manufacturing operation, and no curling or warping of the product is produced.

By using the foregoing apparatus shown in Fig. 1 almost in the same manner as already described in the two previous examples, there were produced various perpendicular-type magnetic films of thicknesses which varied in the range of 1000 Å—10000 Å (100—1000 nm), and for those various products the magnetic properties and alloy compositions thereof were measured.

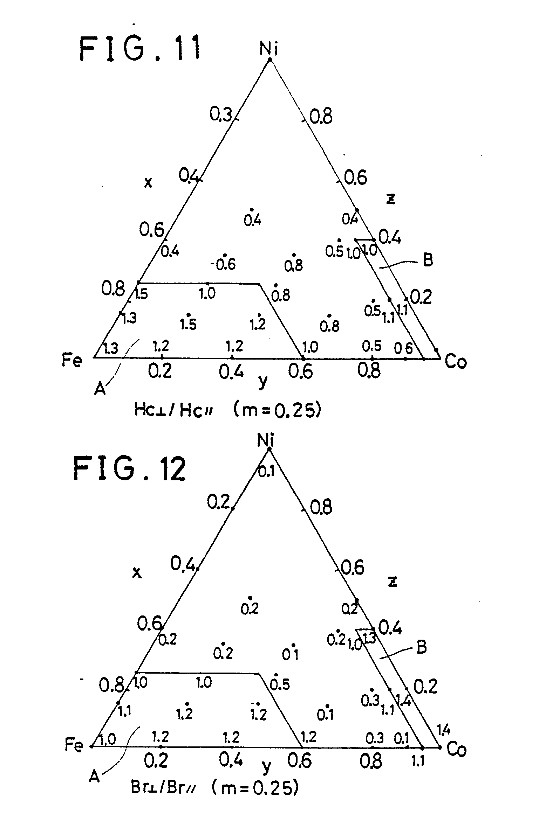

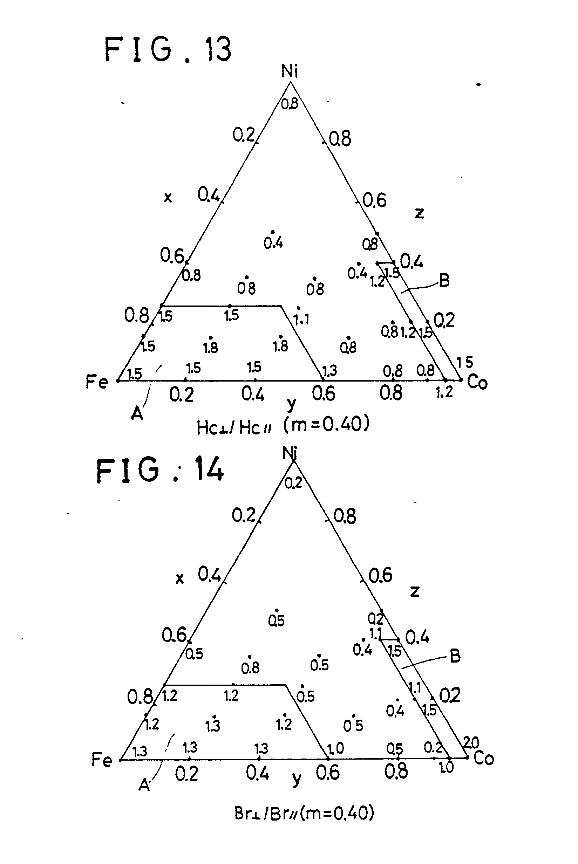

Figures 9 and 10 show the resultant values of $Hc/Hc_{||}$ and $Br_\perp/Br_{||}$ in the case where the $O_2$ component is kept constant at 15 at% while the Fe—Co—Ni composition is varied. As is clear therefrom, in the B region $Hc_\perp/Hc_{||}$ and $Br_\perp/Br_{||}$ are both more than 1. In A $Hc_\perp/Hc_{||}$ is more than 1, but $Br_\perp/Br_{||}$ is less than 1. Thus, it has been concluded that the A and B regions indicate that there cannot be produced predetermined perpendicular magnetic films when the $O_2$ content is 15 at%. It has been also found that in the fcc phase region outside the A and B regions, $Hc_\perp/Hc_{||}$ and $Br_\perp/Br_{||}$ are both less than 1, so that no perpendicular magnetic films can be produced in the fcc phase structure. Similarly, Figs. 11 and 12 show the case including a constant content of 25 at% O, and indicate that there are produced perpendicular magnetic films in the A and B regions. Figs. 13 and 14 show the case including a constant content of 40 at% O and indicate that there are produced perpendicular magnetic films in the A and B regions.

In the third example also, there may be manufactured perpendicular magnetic recording members having the foregoing intermediate soft magnetic film interposed between the substrate and the perpendicular ferromagnetic film.

Furthermore, this embodiment of the foregoing manufacturing method may provide a manufacturing method for manufacturing a further improved perpendicular-type magnetic recording member, characterized in that a magnetic metal Me in a vacuum treatment chamber is vaporized while $O_2$ gas is introduced into the chamber for oxidizing part of the vapors of the magnetic metal Me, and the vapors thereof are deposited on a substrate at a substantially perpendicular incident onto a surface of the substrate and, in the course of the perpendicular-incident deposition of the vapors of the magnetic metal, part of the vapors in ionized, and thus there is formed thereon a perpendicular-deposition magnetic film comprising a predetermined composition of Me and O atoms.

Thus, according to this method, the crystallization of the ferro-magnetic columnar grains is improved and the magnetic crystalline anisotropy is increased. In addition, lattice defects in the columnar grains or subgrains can be eliminated and orderly oriented columnar grains can be obtained, so that the magnetic shape anisotropy thereof is improved.

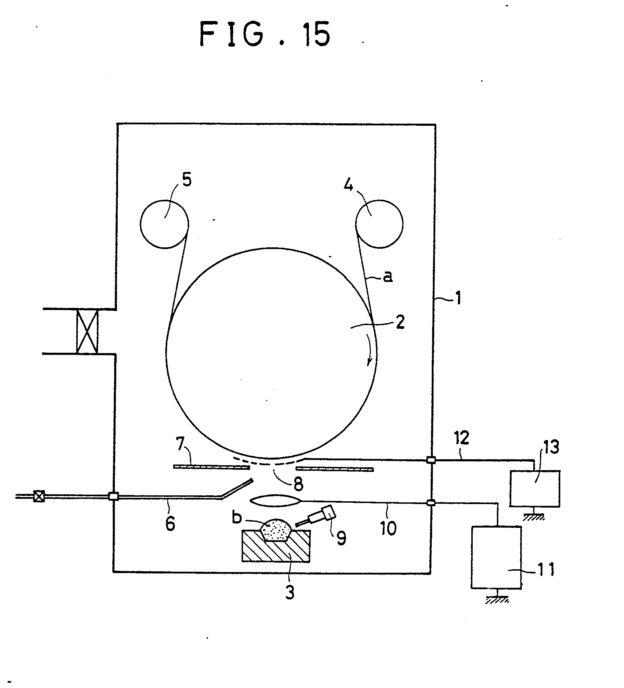

According to another aspect of the present invention, the ionized vapors may be accelerated in speed by an electromagnetic field of d.c. or a.c. power. Examples of this will be explained with reference to Figs. 15 to 19. Fig. 15 shows an apparatus for carrying out the above manufacturing methods. The apparatus is different from the apparatus shown in Fig. 1, in being provided with the following arrangement.

Referring to Fig. 15 the apparatus 1 is provided with an ionizing means. Namely, the ionizing means comprises an electrode 10 provided in a space located above the evaporation source 3, and a d.c. power source or an RF source 11 is connected to the electrode 10. The electrode 10 comprises an anode which is arranged to be supplied with a positive d.c. current or an RF voltage for ionizing part of the metal vapors and oxygen at a high efficiency. In addition, the apparatus is provided with an acceleration means comprising a mesh-shaped electrode 8 for acceleration, which is located near the substrate portion running on the lower end surface of the can 2, with a d.c. or a.c. source 13 being connected thereto.

By using this apparatus, a perpendicular-type magnetic recording member can be manufactured in the following way, for instance. Namely, the chamber 1 is evacuated to below $1 \times 10^{-5}$ Torr $(1.33 \times 10^{-3}$ Pa), and a predetermined composition of Me b is heated so as to be evaporated by the electron heating means 9, while oxygen is introduced into the chamber 1 through the oxygen introduction pipe 6. For instance, the evaporating rate is 200 Å/sec. (20 nm/sec) and the partial pressure of $O_2$ gas is $1 \times 10^{-4}$ Torr $(1.33 \times 10^{-2}$ Pa). Under those conditions, a positive d.c. voltage is applied to the anode 10 connected to the d.c. power source 11. Electrons from the electron beam and secondary electrons from the evaporating liquid surface of the Me are attracted to the positive electric field, and at that time the metal vapors and oxygen atoms collide with those electrons in the electric field space and are ionized. Namely, a comparatively greater part of the ionized metal vapors can be ionized because, while those electrons are being attracted to the positive electric field by the positive voltage applied to the anode 10, the metal vapors are brought into contact with such attracted electrons. In this way, in this case a greater part of the oxygen atoms also can be ionized.

The ionization of the metal vapors and oxygen atoms can be carried out by application of the positive electrode voltage by using the RF electron voltage instead of the direct current. In the case of using the RF voltage, the RF source also serves as an electron generating source, so that it becomes unnecessary to use the electron beam means as the heating means 9, and a non-electron beam type heating means such as an ordinary electric heater or the like can be used in place of the electron beam type means.

Thus, the vapors of the magnetic metal which have been partially ionized together with the oxygen gas pass through the space 8 between the plates 7,7 and are deposited onto the lower surface of the tape substrate a running beneath the lower surface of the can 2, at generally perpendicular incidence to the surface of the substrate, so that there is formed a partially ionized and oxidized perpendicular magnetic film.

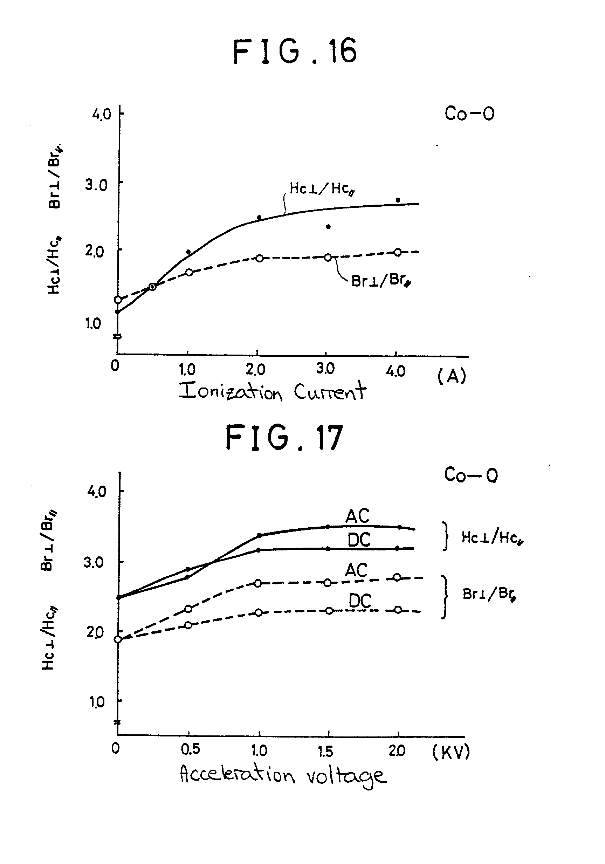

In an example of the above manufacturing method, Co metal was used as the ferro-magnetic metal Me, and the evaporating speed and the $O_2$ gas partial pressure were set to be 200 Å/sec. (20 nm/sec) and $1 \times 10^{-4}$ Torr $(1.33 \times 10^{-2}$ Pa) respectively. The ionizing electric current for applying a positive voltage to the anode 10 was varied, so that there were manufactured perpendicular-type magnetic recording tape members having various perpendicular magnetic films of the Co—O system. For these products, the relationship between the change in the ionizing electric voltage and the magnetic properties of the products was noted. In the meantime, for comparison, various perpendicular-type magnetic recording tape members having various perpendicular magnetic films of the Co—O system were manufactured by the same method as the above but with the anode 10 not supplied with d.c. and were examined as regards the magnetic properties thereof. The results thereof are shown in Fig. 16. As is clear therefrom, the values of $Hc_{\perp}/Hc_{\parallel}$ and $Br_{\perp}/Br_{\parallel}$ are the lowest for the magnetic films manufactured without application of the positive electric voltage to the anode 10, and as the voltage applied thereto was increased, these values were increased. In this case, it was found that the values become almost constant at an ionizing electric current of about 3 A or more.

According to an additional manufacturing method, the previously positively-charged metallic vapors are supplied with an acceleration negative voltage applied to the mesh-shaped electrode 8 connected to the d.c. source 13 through a connector 12, so that those vapors are accelerated in speed and consequently reaction between the accelerated metal atoms and oxygen atoms and the surface diffusion of the metallic atoms are increased. In this way there can be formed on the substrate a perpendicular magnetic film which is higher, in the foregoing mag-

netic properties $Hc_\perp/Hc_{||}$ and $Br_\perp/Br_{||}$, than the foregoing perpendicular magnetic film formed without being supplied with the acceleration means.

Further if a.c. power is used instead of d.c. power for the acceleration means so that a positive electric voltage and a negative one may be applied alternately to the electrode 8, at each time the negative voltage is applied, the ionized metallic vapors are accelerated thereby and in addition at each time when the positive voltage is applied, the negatively-charged O atoms are accelerated, so that a uniform reaction between the metallic vapors and the oxygen atoms and the diffusion thereof can be improved as compared with the application of d.c. power.

More specifically, for example, various perpendicular-type recording members having various perpendicular magnetic films of the Co—O system were manufactured by the ionizing electric current being set constant at 2.0 A, and the acceleration voltage applied to the acceleration electrode 8 from the d.c. or a.c. power being varied. The relationship between the acceleration electric voltage and the magnetic properties of those films were examined. The results thereof are shown in Fig. 17. As is clear from Fig. 16 and Fig. 17, the values of $Hc_\perp/Hc_{||}$ and of $Br_\perp/Br_{||}$ associated with the a.c. and d.c. powers if the acceleration voltage is applied, is improved as compared with the case in which the acceleration voltage is not applied, and also as the acceleration electric voltage is increased, the respective properties are also increased. Further, if the substrate is made of an electrically insulating material such as polyethylene terephthalate (PET) or the like, the use of a.c. power is preferable.

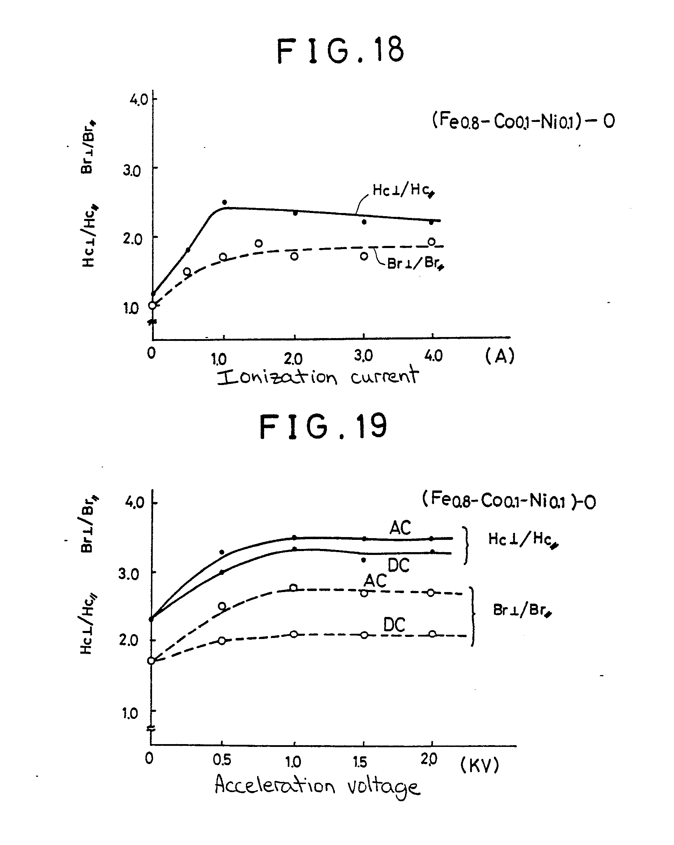

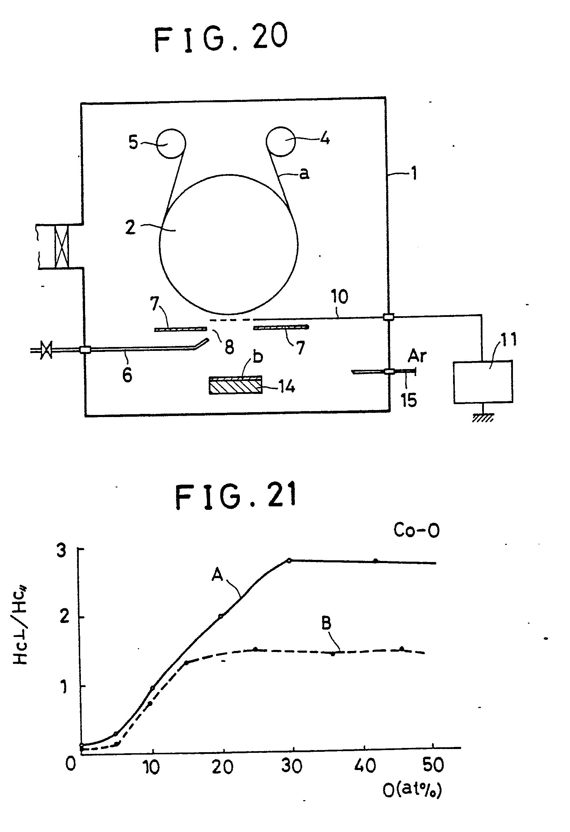

Figs. 18 and 19 show the results of examining the relationship of the ionizing current and the acceleration voltage with the magnetic properties of perpendicular magnetic films of Fe—Co—Ni—O composition manufactured by the foregoing manufacturing method using the apparatus shown in Fig. 15 when an Fe-10% Co-10% Ni alloy is used as the evaporating material metal b. From those Figures 18 and 19, it is clear that similarly to the above example of a Co—O composition film, the ionization and acceleration effects can be recognized.

As a result of many experiments and examinations, it has been found that perpendicular magnetic films of $Me_{1-m}O_m$ with improved properties brought about by the invention, are obtained with such a metal and oxygen composition range as mentioned below:—

$(Fe_xCo_yNi_z)_{1-m}O_m$ where $0 \leqq x \leqq 0.05$, $0 \leqq z \leqq 0.40$, $x+y+z=1$, and $0.15 \leqq m \leqq 0.50$ or $(Fe_xCo_yNi_z)_{1-m}O_m$ where $0.40 \leqq x \leqq 1.0$, $0 \leqq z \leqq 0.25$, $x+y+z=1$, and $0.25 \leqq m \leqq 0.50$.

In the foregoing examples also, the perpendicular magnetic film may have the aforementioned soft magnetic material film between the substrate and the magnetic film.

According to another manufacturing method according to the present invention, a perpendicular-type magnetic recording member having a perpendicular magnetic film comprising the Me—O composition can be manufactured by a sputtering process, and it may be characterized in that a target comprising a magnetic metal Me in a vacuum treatment chamber is sputtered under conditions such that $O_2$ gas is introduced thereinto and the sputtered magnetic metal particles are deposited on the surface of a substrate at a substantially perpendicular incident angle thereto, while part of the atoms of the innumerable sputtered particles of magnetic metal Me is oxidized, so that there is formed on the surface of the substrate a perpendicular magnetic film having a predetermined composition of magnetic metal Me and O atoms.

Thus, there can be obtained a perpendicular-type magnetic recording member which has improved properties of $Hc_\perp/Hc_{||}$ and $Br_\perp/Br_{||}$.

In order to improve the magnetic properties produced by the above manufacturing method, an additional manufacturing method may be provided characterized in that there are provided in the vacuum treatment chamber the target of the magnetic metal Me and an electrode comprising the substrate itself or an electrode provided near the substrate and under conditions such that the electrode is supplied with an electric (possibly negative) voltage which is either d.c. or a.c., and the target is sputtered while $O_2$ gas is introduced into the chamber so that innumerable sputtered magnetic fine metal Me particles are deposited on the substrate at a substantially perpendicular incident angle thereto, while some atoms thereof are oxidized, so that there is formed on the substrate a perpendicular magnetic film comprising a predetermined composition of magnetic metal Me and O atoms.

Figs. 20—25 relate to examples of the foregoing methods according to this invention. Referring to Fig. 20, the apparatus 1 is suitable for carrying out these manufacturing methods of this invention. The apparatus is almost the same as those shown in Fig. 1 and Fig. 15, but is different therefrom in that instead of evaporation means a sputtering means is provided therein. Namely, just under the can 2, there is provided a sputtering cathode 14 on which a ferro-magnetic metal layer b is provided. Preferably, the mesh-shaped acceleration electrode 10 connected to the d.c. or a.c. power source 11 is located near the surface of the substrate a running on the lower end surface of the can 2. Numeral 15 denotes an inlet pipe for introducing a sputtering gas such as Ar or the like into the chamber 1.

For carrying out an example of the invention, the apparatus of Fig. 20 is operated as follows: The chamber 1 is evacuated to below $1 \times 10^{-5}$ Torr ($1.33 \times 10^{-3}$ Pa), Ar gas is introduced into the chamber 1 through the inlet pipe 15, and the metal Me layer b is sputtered under Ar gas pressure of $5 \times 10^{-3}$ Torr. ($6.65 \times 10^{-1}$ Pa). The sputtering is carried out by a d.c. magnetron sputtering process. As a result, a comparatively large amount of the innumerable sputtered Me atoms, usually about 10% thereof, become ionized atoms. Energy generated at the time when the Me atoms are sputtered is as high as about 10—100 eV (1.6—16 aJ) and can serve to produce a perpendicular magnetic film of the Me—O system which has improved perpendicular magnetic anisotropy.

$O_2$ gas is introduced at a constant flow rate into the chamber 1 from the oxygen supply pipe 6, and is brought into contact with the rising sputtered and partially-ionized metal Me atoms so that part of the metal atoms is oxidized. Mixed vapors of the metal atoms and the oxidized atoms are deposited on the substrate running at a predetermined constant speed, through the interval opening 8, at a substantially perpendicular incident angle to the substrate. There is thus formed on the surface of the substrate a perpendicular magnetic film of a predetermined composition comprising two phases of the magnetic metal Me atoms and non-magnetic oxides thereof. The perpendicular magnetic recording film thus formed is taken up by the roller 5.

According to a development of this method, during the operation of the above manufacturing method, a negative voltage is applied to the acceleration electrode 10 from the d.c. power source 11 for instance, so that there is created around the electrode 10 a negative electric field. As a result of this field the partially ionized sputtered positively-charged metal Me atoms are accelerated in speed by the electrode 10 when they go upwards into that negative electric field. In the case where the power source 11 is a.c., the electrode 10 is given an alternate application of positive and negative voltages, and thereby there is caused the acceleration of ionized Me atoms and of partially ionized O atoms alternately. Consequently there can be carried out effectively near the mesh-shaped electrode 10 a reaction between the sputtered metal Me atoms and the oxygen atoms and diffusion thereof. Accordingly there can be formed a good perpendicular magnetic film composed of metal and O atoms comprising two phases of metal Me atoms and oxides thereof which are uniformly diffused on the entire surface of the substrate-a. If the material of the substrate is electrically insulating, use of the a.c. voltage application is preferable in order to prevent electrical charging. In a case where an electrically conductive substrate is used, the substrate itself can be arranged to be used as an acceleration electrode by being connected to the a.c. or d.c. power source (this version not being illustrated).

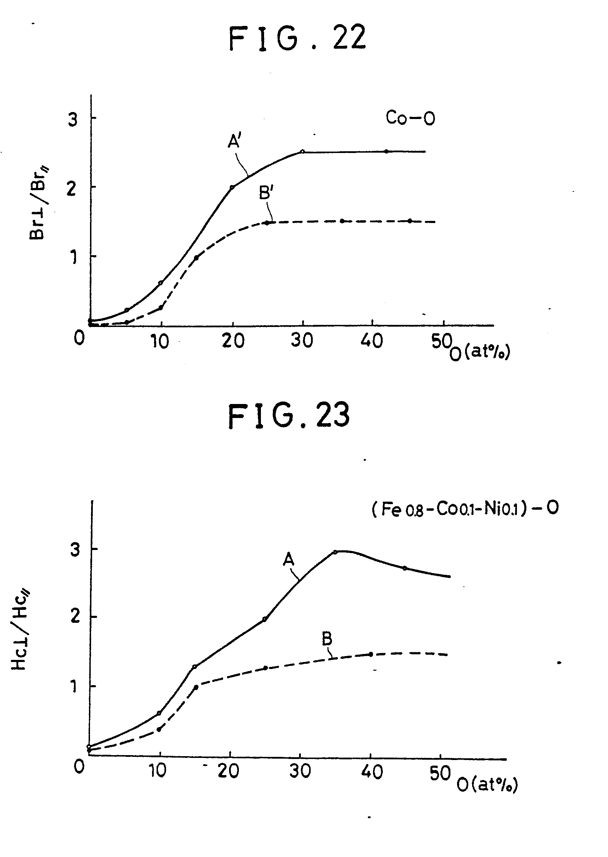

In Figs. 21 and 22, curves A and A' show the respective perpendicular magnetic properties $Hc_\perp/Hc_\parallel$ and $Br_\perp/Br_\parallel$ of various perpendicular magnetic films prepared according to this invention and by varying the composition ratio of oxygen to Co which is used as the target b. Also in those figures, curves B and B' show the respective magnetic properties of various perpendicular magnetic films of the same composition ratio of Co—O as above prepared, for comparison, by foregoing proposed evaporation-process of this invention in which Co is evaporated by the electron beam heating means, while $O_2$ is introduced into the chamber, and is deposited on the substrate at a substantially perpendicular incident angle to the same as explained in the first example. As is clear from those curves, the magnetic properties of the Co—O perpendicular magnetic films prepared by the sputtering process are better than those prepared by the evaporation process.

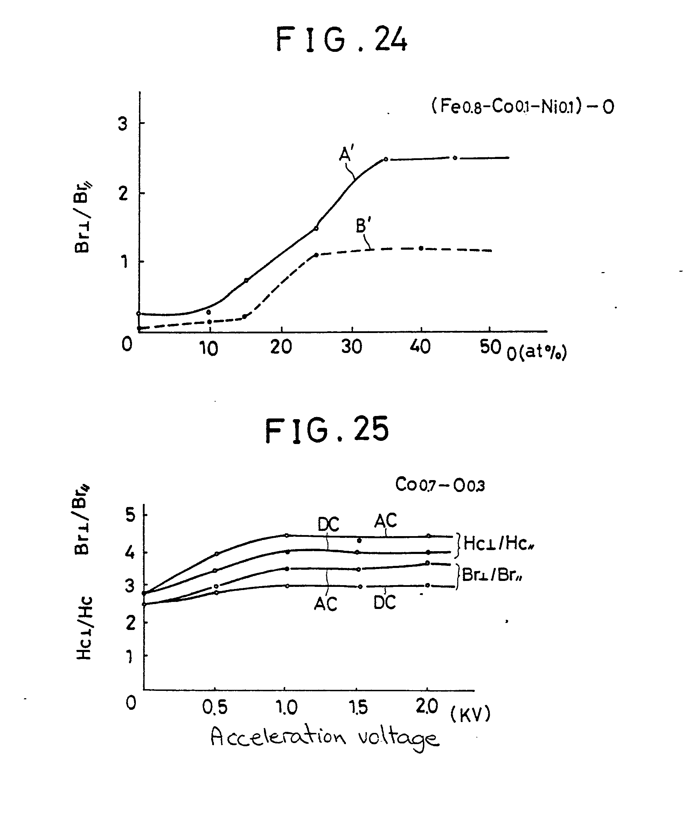

Fig. 23 and Fig. 24 show respective perpendicular magnetic properties A, A' of various perpendicular magnetic films of Fe—Co—Ni—O prepared by using a 10% Co—10% Ni—remainder Fe alloy $(Fe_{0.8}—Co_{0.1}—Ni_{0.1})$ as the target b while the O content is varied from 0 to 50 at%, by the sputtering process. B, B' are the respective perpendicular magnetic properties of various perpendicular magnetic films of the same composition prepared, for comparison, by the foregoing proposed evaporation process of this invention. In this case also, it is clear from those curves that the perpendicular magnetic properties of the products prepared by the sputtering process of this invention are better than those of the products prepared by the evaporation process of this invention.

Fig. 25 shows curves of the magnetic properties of perpendicular magnetic films of a $Co_{0.7}—O_{0.3}$ composition prepared respectively by applying the respective acceleration voltage of the θ d.c. voltage and the a.c. voltage during deposition of the sputtered Co atoms on the substrate while $O_2$ gas is introduced.

As is clear therefrom, the respective properties $Hc_\perp/Hc_\parallel$ and $Br_\perp/Br_\parallel$ can be improved by the application of the acceleration voltages, and the application of a.c. voltage provides a better improvement in those properties than that of d.c. voltage.

The perpendicular magnetic films of the Me—O composition prepared by the sputtering process of this invention are obtained with $(Fe_xCo_yNi_z)_{1-m}O_m$ where $0\leqq x\leqq0.05$, $0\leqq z\leqq0.40$, $x+y+z=1$, and $0.15\leqq m\leqq0.50$, or with $(Fe_xCo_yNi_z)_{1-m}O_m$ where $0.40\leqq x\leqq1.0$, $0\leqq z\leqq0.25$, $x+y+z=1$ and $0.25\leqq m\leqq0.50$. Cn order to obtain magnetic films with such compositions as are mentioned above, the oxygen introduction rate, the sputtering process, and the running speed of the substrate are controlled appropriately. In general, the usual film thickness prepared by the sputtering process of this invention is in the range of 1000—10000 Å (100—1000 nm). Before the substrate is subjected to the sputtering process, it may have applied to it the soft magnetic material film of permalloy or the like.

Thus, according to examples of this invention, in manufacturing a perpendicular magnetic recording member, a perpendicular magnetic film on a substrate is so prepared that vapors of ferromagnetic metal Me are deposited on the substrate at a substantially perpendicular incident angle to the same while oxygen gas is introduced into the chamber. In this way, a perpendicular magnetic film of Me—O composition having improved magnetic properties can be obtained uniformly in a continuous manufacturing operation for a long period of time. When the substrate is not heated, no curling or warping of the substrate occurs. In the course of manufacturing the inventive film, the vapors of the ferro-magnetic metal may be ionized and/or additionally accelerated in speed by the application of electric voltage. The magnetic properties such as $Hc_\perp/Hc_{||}$ and $Br_\perp/Br_{||}$ of the film can thus be more improved.

## Claims

1. A magnetic recording member comprising a substrate carrying, either directly on its surface or on an intermediate layer of soft magnetic material coated on its surface, a perpendicular magnetic film characterised in that said magnetic film is formed from a composition represented by $(Fe_xCo_yNi_z)_{1-m}O_m$, where $0 \leqq x \leqq 0.05$, $0 \leqq z \leqq 0.40$, $x+y+z=1$, and $0.15 \leqq m \leqq 0.50$ and has a columnar structure of the hcp type in which the c axis is oriented in the direction perpendicular to the plane of the film, whereby the film has magnetic anisotropy in a direction perpendicular to the plane of the film satisfying the condition of $Ku_\perp \geqq 2\pi Ms^2$, $Hc_\perp > Hc_{||}$ and $Br_\perp > Br_{||}$.

2. A magnetic recording member comprising a substrate carrying, either directly on its surface or on an intermediate layer of soft magnetic material coated on its surface, a perpendicular magnetic film characterised in that said magnetic film is formed from a composition represented by $(Fe_xCo_yNi_z)_{1-m}O_m$, where $0.40 \leqq x \leqq 1.0$, $0 \leqq z \leqq 0.25$, $x+y+z=1$, and $0.25 \leqq m \leqq 0.50$ and has a columnar structure of the bcc type in which the ferro-magnetic columnar grain phase is oriented in the direction perpendicular to the plane of the film and is surrounded by a non-magnetic oxide phase, whereby the film has magnetic anisotropy in a direction perpendicular to the plane of the film satisfying the condition of $Ku_\perp \geqq 2\pi Ms^2$, $Hc_\perp > Hc_{||}$ and $Br_\perp > Br_{||}$.

3. A method of manufacturing a magnetic recording member by introducing a magnetic metal into a vacuum treatment chamber, vaporising the magnetic metal, and depositing the vapors on a substrate at a substantially perpendicular angle of incidence thereto so that there is formed on the substrate a perpendicular magnetic film characterised in that oxygen gas is introduced into the chamber so as to oxidise part of the magnetic metal and the method is carried out so that the magnetic film is formed from a composition represented by $(Fe_xCo_yNi_z)_{1-m}O_m$, where $0 \leqq x \leqq 0.05$, $0 \leqq z \leqq 0.40$, $x+y+z=1$, and $0.15 \leqq m \leqq 0.50$ and has a columnar structure of the hcp type in which the c axis is oriented in the direction perpendicular to the plane of the film, whereby the film has magnetic anisotropy in a direction perpendicular to the plane of the film satisfying the condition of $Ku_\perp \geqq 2\pi Ms^2$, $Hc_\perp > Hc_{||}$ and $Br_\perp > Br_{||}$.

4. A method of manufacturing a magnetic recording member by introducing a magnetic metal into a vacuum treatment chamber, vaporizing the magnetic metal, and depositing the vapors on a substrate at a substantially perpendicular angle of incidence thereto so that there is formed on the substrate a perpendicular magnetic film characterised in that oxygen gas is introduced into the chamber so as to oxidise part of the magnetic metal and the method is carried out so that the magnetic film is formed from a composition represented by $(Fe_xCo_yNi_z)_{1-m}O_m$, where $0.40 \leqq z \leqq 1.0$, $0 \leqq z \leqq 0.25$, $x+y+z=1$, and $0.25 \leqq m \leqq 0.50$ and has a columnar structure of the bcc type in which the ferro-magnetic columnar grain phase is oriented in the direction perpendicular to the plane of the film and is surrounded by a non-magnetic oxide phase, whereby the film has magnetic anisotropy in a direction perpendicular to the plane of the film satisfying the condition of $Ku_\perp \geqq 2\pi Ms^2$, $Hc_\perp > Hc_{||}$ and $Br_\perp > Br_{||}$.

5. A method of manufacturing a magnetic recording member according to claim 3 or 4 wherein during the course of the deposition, part of the vapors is ionized.

6. A method of manufacturing a magnetic recording member according to claim 5, wherein the ionized vapors are accelerated by an electromagnetic field energised by D.C. and A.C. power.

7. A method of manufacturing a magnetic recording member according to any one of claims 3 to 6 wherein the magnetic metal is in the form of a target in the vacuum treatment chamber and is sputtered so that sputtered fine particles of the magnetic metal are deposited on the substrate to produce said film.

8. A method of manufacturing a magnetic recording member according to claim 7 wherein the vacuum treatment chamber includes an electrode supplied with an electric voltage by D.C. or A.C. power.

9. A method of manufacturing a magnetic recording member according to claim 8 wherein the electrode is constituted by the substrate.

10. A method of manufacturing a magnetic recording member according to any one of claims 3 to 9, wherein the substrate is coated with a layer of soft magnetic material on which the substantially perpendicular magnetic film is formed.

## Patentansprüche

1. Magnetisches Aufzeichnungsmedium, mit einem Substrat, das entweder direkt auf seiner Oberfläche oder auf einer Zwischenlage aus einem weichmagnetischen Material, welches auf dessen Oberfläche aufgebracht ist, einen quermagnetisierbaren Film trägt, dadurch gekennzeichnet, daß der magnetische Film aus einer Verbindung gebildet ist, die durch den Ausdruck $(Fe_xCo_yNi_z)_{1-m}O_m$, repräsentiert ist, wobei $0 \leqq x \leqq 0,05$, $0 \leqq z \leqq 0,40$, $x+y+z=1$ und $0,15 \leqq m \leqq 0,50$ ist, und eine säulenförmige Struktur des hcp-Typs hat, in welcher die c-Achse in der Richtung senkrecht zu der Ebene des Films orientiert ist, wodurch der Film eine magnetische Anisotropie in einer Richtung senkrecht zu der Ebene des Films hat, die die Bedingung $Ku_\perp \geqq 2\pi Ms^2$, $Hc_\perp > Hc_{\parallel}$ und $Br_\perp > Br_{\parallel}$ erfüllt.

2. Magnetisches Aufzeichnungsmedium, mit einem Substrat, das entweder direkt auf seiner Oberfläche oder auf einer Zwischenschicht aus weichmagnetischem Material, das auf dessen Oberfläche aufgebracht ist, einen quermagnetisierbaren Film trägt, dadurch gekennzeichnet, daß der magnetische Film auseiner Verbindung gebildet ist, die durch den Ausdruck $(Fe_xCo_yNi_z)_{1-m}O_m$ repräsentiert ist, wobei $0,40 \leqq x \leqq 1,0$, $0 \leqq z \leqq 0,25$, $x+y+z=1$ und $0,25 \leqq m \leqq 0,50$ ist, und eine säulenförmige Struktur des bcc-Typs hat, in welcher die ferromagnetische säulenförmige Körnungsphase in der Richtung senkrecht zu der Ebene des Films orientiert ist und durch eine nichtmagnetische Oxidphase umgeben ist, wodurch der Film eine magnetische Anisotropie in einer Richtung senkrecht zu der Ebene des Films hat, die die Bedingung $Ku_\perp \geqq 2\pi Ms^2$, $Hc_\perp > Hc_{\parallel}$ und $Br_\perp > Br_{\parallel}$ erfüllt.

3. Verfahren zur Herstellung eines magnetischen Aufzeichnungsmediums durch Einleiten eines magnetischen Metalls in eine Vakuumbehandlungskammer, Verdampfen des magnetischen Metalls und Ablagern der Dämpfe auf einem Substrat unter einem im wesentlichen senkrechten Einfallwinkel, so daß auf dem Substrat ein quermagnetisierbarer Film ausgebildet wird, dadurch gekennzeichnet, daß Sauerstoffgas in die Kammer eingeleitet wird, um auf diese Weise einen Teil des magnetischen Metalls zu oxidieren, und das Verfahren derart durchgeführt wird, daß der magnetische Film aus einer Verbindung gebildet wird, die durch den Ausdruck $(Fe_xCo_yNi_z)_{1-m}O_m$ repräsentiert ist, wobei $0 \leqq x \leqq 0,05$, $0 \leqq z \leqq 0,40$, $x+y+z=1$ und $0,15 \leqq m \leqq 0,50$ ist, und eine säulenförmige Struktur des hcp-Typs hat, in welcher die c-Achse in der Richtung senkrecht zu der Ebene des Films orientiert ist, wodurch der Film eine magnetische Anisotropie in einer Richtung senkrecht zu der Ebene des Films hat, die die Bedingung $Ku_\perp \geqq 2\pi Ms^2$, $Hc_\perp > Hc_{\parallel}$ und $Br_\perp > Br_{\parallel}$ erfüllt.

4. Verfahren zur Herstellung eines magnetischen Aufzeichnungsmediums durch Einleiten eines magnetischen Metalls in eine Vakuumbehandlungskammer, Verdampfen des magnetischen Metalls und Ablagern der Dämpfe auf einem Substrat unter einem im wesentlichen senkrechten Einfallwinkel, so daß auf dem Substrat ein quermagnetisierbarer Film ausgebildet wird, dadurch gekennzeichnet, daß Sauerstoffgas in die Kammer eingeleitet wird, um auf diese Weise einen Teil des magnetischen Metalls zu oxidieren, und das Verfahren derart durchgeführt wird, daß der magnetische Film aus einer Verbindung gebildet wird, die durch den Ausdruck $(Fe_xCo_yNi_z)_{1-m}O_m$ repräsentiert ist, wobei $0,40 \leqq x \leqq 1,0$, $0 \leqq z \leqq 0,25$, $x+y+z=1$ und $0,25 \leqq m \leqq 0,50$ ist, und eine säulenförmige Struktur des bcc-Typs hat, in welcher die ferromagnetische säulenförmige Körnungsphase in der Richtung senkrecht zu der Ebene des Films orientiert ist und durch eine nichtmagnetische Oxidphase umgeben ist, wodurch der Film eine magnetische Anisotropie in einer Richtung senkrecht zu der Ebene des Films hat, die die Bedingung $Ku_\perp \geqq 2\pi Ms^2$, $Hc_\perp > Hc_{\parallel}$ und $Br_\perp > Br_{\parallel}$ erfüllt.

5. Verfahren zur Herstellung eines magnetischen Aufzeichnungsmediums nach Anspruch 3 oder 4, bei dem während des Verlaufes der Ablagerung ein Teil des Dampfes ionisiert wird.

6. Verfahren zur Herstellung eines magnetischen Aufzeichnungsmediums nach Anspruch 5, bei dem die ionisierten Dämpfe durch ein elektromagnetisches Feld beschleunigt werden, das seine Energie aus einer Gleichstrom- und einer Wechselstromquelle bezieht.

7. Verfahren zur Herstellung eines magnetischen Aufzeichnungsmediums nach einem der Ansprüche 3 bis 6, bei dem das magnetische Metall in Forme eines Target in der Vakuumbehandlungskammer ausgebildet ist und versprüht wird, so daß versprühte feine Partikel des magnetischen Metalls auf dem Substrat abgelagert werden, um den Film zu erzeugen.

8. Verfahren zur Herstellung eines magnetischen Aufzeichnungsmediums nach Anspruch 7, bei dem die Vakuumbehandlungskammer eine Elektrode enthält, die mit einer elektrischen Spannung durch eine Gleichstrom- oder eine Wechselstromquelle versorgt wird.

9. Verfahren zur Herstellung eines magnetischen Aufzeichnungsmediums nach Anspruch 8, bei dem die Elektrode durch das Substrat gebildet ist.

10. Verfahren zur Herstellung eines magnetischen Aufzeichnungsmediums nach einem der Ansprüche 3 bis 9, bei dem das Substrat mit einer Schicht aus weichmagnetischem Material bedeckt ist, auf der der im wesentlichen quermagnetisierbare Film ausgebildet wird.

**Revendications**

1. Un milieu d'enregistrement magnétique comprenant un substrat qui, soit directement sur sa surface, soit sur une couche intermédiaire de matériau magnétique doux portant un revêtement sur sa surface, porte un film magnétique perpendiculaire caractérisé par le fait que ledit film magnétique est formé à partir d'une composition représentée par la formule $(Fe_xCo_yNi_z)_{1-m}O_m$, dans laquelle $0 \leqslant x \leqslant 0,05$, $0 \leqslant z \leqslant 0,40$, $x+y+z=1$, et $0,15 \leqslant m \leqslant 0,50$, et a une structure en colonne de type hcp, dans laquelle l'axe c est orienté dans la direction perpendiculaire au plan du film, d'ou il résulte que le film a une anisotropie magnétique dans une direction perpendiculaire au plan du film, satisfaisant la condition $Ku_\perp \geqslant Ms^2$, $Hc_\perp > Hc_{\parallel}$ et $Br_\perp > Br_{\parallel}$.

2. Un milieu d'enregistrement magnétique comprenant un substrat qui, soit directement sur sa surface, soit sur une couche intermédiaire de matériau magnétique doux portant un revêtement sur sa surface, porte un film magnétique perpendiculaire caractérisé par le fait que ledit film magnétique est formé à partir d'une composition représentée par la formule $(Fe_xCo_yNi_z)_{1-m}O_m$, dans laquelle $0,40 \leqslant x \leqslant 1$, $O \leqslant z \leqslant 0,25$, $x+y+z=1$, et $0,25 \leqslant m \leqslant 0,50$, et a une structure en colonne de type bcc, dans laquelle la phase de grain ferromagnétique en colonne est orientée dans la direction perpendiculaire au plan du film et est entourée par une phase d'oxyde non magnétique, d'où il résulte que le film a une anisotropie magnétique dans une direction perpendiculaire au plan du film, satisfaisant la condition $Ku_\perp \geqslant 2\pi Ms^2$, $Hc_\perp > Hc_\parallel$ et $Br_\perp > Br_\parallel$.

3. Un procédé de fabrication d'un milieu d'enregistrement magnétique par introduction d'un métal magnétique dans une chambre de traitement sous vide, par vaporisation du métal magnétique et par dépôt des vapeurs sur un substrat à un angle d'incidence sensiblement perpendiculaire à celui-ci, de manière que se forme sur le substrat un film magnétique perpendiculaire caractérisé par le fait que du gaz oxygéne est introduit dans la chambre afin d'oxyder une partie du métal magnétique, et que le procédé est effectué de telle sorte que le film magnétique soit formé à partir d'une composition représentée par la formule $(Fe_xCo_yNi_z)_{1-m}O_m$, dans laquelle $O \leqslant x \leqslant 0,05$, $O \leqslant z \leqslant 0,40$, $x+y+z=1$, et $0,15 \leqslant m \leqslant 0,50$, et ait une structure en colonne de type hcp, dans laquelle l'axe c est orienté dans la direction perpendiculaire au plan du film, d'où il résulte que le film a une anisotropie magnétique dans une direction perpendiculaire au plan du film, satisfaisant la condition $Ku_\perp \geqslant 2\pi Ms^2$, $Hc_\perp > Hc_\parallel$ et $Br_\perp > Br_\parallel$.

4. Un procédé de fabrication d'un milieu d'enregistrement magnétique par introduction d'un métal magnétique dans une chambre de traitement sous vide, par vaporisation du métal magnétique et par dépôt des vapeurs sur un substrat à un angle d'incidence sensiblement perpendiculaire à celui-ci, de manière que se forme sur le substrat un film magnétique perpendiculaire caractérisé par le fait que du gaz oxygène est introduit dans la chambre afin d'oxyder une partie du métal magnétique, et que le procédé est effectué de telle sorte que le film magnétique soit formé à partir d'une composition représentée par la formule $(Fe_xCo_yNi_z)_{1-m}O_m$, dans laquelle $0,40 \leqslant x \leqslant 1$, $0 \leqslant z \leqslant 0,25$, $x+y+z=1$, et $0,25 \leqslant m \leqslant 0,50$, et ait une structure en colonne de type bcc, dans laquelle la phase de grain ferromagnétique en colonne est orientée dans la direction perpendiculaire au plan du film et est entourée par une phase d'oxyde non magnétique, d'où il résulte que le film a une anisotropie magnétique dans une direction perpendiculaire au plan du film, satisfaisant la condition $Ku_\perp \geqslant 2\pi Ms^2$, $Hc_\perp > Hc_\parallel$ et $Br_\perp > Br_\parallel$.

5. Un procédé de fabrication d'un milieu d'enregistrement magnétique selon la revendication 3 ou 4 dans lequel, pendant l'opération de dépôt, une partie des vapeurs est ionisée.

6. Un procédé de fabrication d'un milieu d'enregistrement magnétique selon la revendications 5, dans lequel les vapeurs ionisées sont accélérées par un champ magnétique créé par des courants continu et alternatif.

7. Un procédé de fabrication d'un milieu d'enregistrement magnétique selon l'une quelconque des revendications 3 à 6 dans lequel le métal magnétique a la forme d'une cible dans la chambre de traitement sous vide et est pulvérisé de telle sorte que des particules fines pulvérisées du métal magnétique sont déposées sur le substrat pour produire ledit film.

8. Un procédé de fabrication d'un milieu d'enregistrement magnétique selon la revendication 7, dans lequel la chambre de traitement sous vide inclut une électrode alimentée par une tension électrique par courant continue ou alternatif.

9. Un procédé de fabrication d'un milieu d'enregistrement magnétique selon la revendication 8, dans lequel l'électrode est constituée par le substrat.

10. Un procédé de fabrication d'un milieu d'enregistrement magnétique selon l'une quelconque des revendications 3 à 9 dans lequel le substrat est revêtu d'une couche de matériau magnétique doux sur lequel est formée le film magnétique sensiblement perpendiculaire.

# FIG.1

# FIG.3

FIG.2A

FIG.2B

FIG.2C

# F I G . 4

# F I G . 5

# FIG . 6

Saturation magnetization (KG)

# FIG. 7

# FIG. 8

# FIG.9

$Hc_\perp/Hc_\parallel$ (m = 0.15)

# FIG.10

$Br_\perp/Br_\parallel$ (m = 0.15)

# FIG.11

Hc⊥/Hc∥ (m=0.25)

# FIG.12

Br⊥/Br∥ (m=0.25)

# FIG. 13

Hc⊥/Hc∥ (m=0.40)

# FIG. 14

Br⊥/Br∥(m=0.40)

# F I G . 15

# FIG.16

Co—O

(A) Ionization Current

# FIG.17

Co—O

(KV) Acceleration voltage

10

# FIG.18

$(Fe_{0.8}-Co_{0.1}-Ni_{0.1})-O$

# FIG.19

$(Fe_{0.8}-Co_{0.1}-Ni_{0.1})-O$

0 122 030

# FIG. 20

# FIG. 21

12

# FIG. 22

# FIG. 23

# FIG.24

$(Fe_{0.8}-Co_{0.1}-Ni_{0.1})-O$

# FIG.25

$Co_{0.7}-O_{0.3}$